# EUROPÄISCHE PATENTANMELDUNG

(11) **EP 3 696 743 A1**
(43) Veröffentlichungstag der Anmeldung: **19.08.2020**
(21) Anmeldenummer: 19156593.6
(22) Anmeldetag: 12.02.2019
(51) Int. Cl.: G06Q 10/06, G06Q 10/00

(54) **VERFAHREN UND ÜBERWACHUNGSVORRICHTUNG ZUR ÜBERWACHUNG EINES TECHNISCHEN SYSTEMS MITTELS ANOMALIEERKENNUNG**

(71) Anmelder: Siemens Aktiengesellschaft, 80333 München (DE)
(72) Erfinder: Kehrer, Johannes, 81829 München (DE); Weber, Stefan Hagen, 81927 München (DE); Paulitsch, Christoph, 76137 Karlsruhe (DE)

(57) **Zusammenfassung**

Verfahren zur Überwachung eines technischen Systems mittels Daten, die eine Mehrzahl von Datendimensionen aufweisen, die verschiedenen Parametern des Systems entsprechen, und die Daten mittels Anomalieerkennung bewertet werden, mit den Schritten:
- Ermitteln eines multidimensionalen Clusterbereichs mittels einem Anomalieerkennungsalgorithmus basierend auf multidimensionalen Daten des Systems, und Bewerten der Datenpunkte innerhalb des Clusterbereichs als normale Daten,
- Darstellen eines zweidimensionalen Clusterbereichs (C13) des multidimensionalen Clusterbereichs für jede Kombination von unterschiedlichen Datendimensionen in jeweils einem zweidimensionalen Feld (M12, M13, M14, M23, M24, M34) in einer Ebene (10) eines Pixelraums; und
für mindestens einen neuen multidimensionalen Datenpunkt (D1) :
- Ermitteln einer Bewertung des neuen multidimensionalen Datenpunktes (D1) durch den Anomalieerkennungsalgorithmus;
- Ermitteln einer Position des neuen Datenpunktes (D1) bezüglich des Clusterbereiches anhand der Datenwerte des Datenpunktes (D1) für jede Datendimension,
- Eintragen des Datenpunktes (D1) in jedes der zweidimensionalen Felder (M12, M13, M14, M23, M24, M34) an der jeweils ermittelten Position; und
- Bewerten des neuen Datenpunktes (D1) durch Kennzeichnung des Datenpunktes (D1) entsprechend der ermittelten Bewertung in jedem der zweidimensionalen Felder (M12, M13, M14, M23, M24, M34).

## Beschreibung

Die Erfindung betrifft ein Verfahren und eine Überwachungsvorrichtung zur Überwachung eines technischen Systems mittels Daten, die eine Mehrzahl von Datendimensionen aufweisen, die verschiedenen Parametern des Systems entsprechen, und die Daten mittels Anomalieerkennung bewertet werden.

Eine datenbasierte Anomalieerkennung wird beispielsweise dazu eingesetzt, um unerwünschte oder gefährliche Betriebszustände von Geräten oder Maschinen frühzeitig zu erkennen und rechtzeitig darauf reagieren zu können. Beispielsweise kann durch Anomalieerkennung ein Verschleiß eines Gerätes erkannt werden und durch rechtzeitige Reparatur oder Ersatz des Gerätes ein Ausfall einer ganzen Anlage oder eine Produktion fehlerhafter Produkte verhindert werden. Durch eine Anomalieerkennung sind ungewollte Produktionsminderungen, Produktionsrückgänge, verringerte Anlagenverfügbarkeit, Qualitätseinbußen, Nachfragerückgänge, verschleißbedingte Gerätefehler, Motor-Schwergängigkeit, Kupplungsschäden, Ablagerungen, Fehlparametrierung und Lecks identifizierbar beziehungsweise können diese verhindert werden. Eine solche datenbasierte Anomalieerkennung bewertet Daten bezüglich einer Mehrzahl von Datendimensionen. Beispielsweise umfasst ein multidimensionaler Datenpunkt verschiedene über Sensoren im Gerät detektiert Parameter, wie Temperatur, Druck, Durchfluss, aber auch den vorliegenden Betriebsmodus, vorliegende Geräteeinstellungen. Dies sind lediglich Beispiele für verschiedene Datendimensionen von multidimensionalen Datenpunkten, die bei einer Anomalieerkennung bewertet werden.

Ein weit verbreitetes Verfahren zur Anomalieerkennung ist das Trainieren eines dichtebasierten Anomalieerkennungsalgorithmus, beispielsweise einem dichtebasierten Clustering-Algorithmus und insbesondere dem Algorithmus DBSCAN, auf Daten aus einem regelgerechten Betrieb, auch als Normalbetrieb bezeichnet, also Daten ohne Anomalien. Dabei wird eine optimierte Parametrisierung des Anomalieerkennungsalgorithmus durchgeführt. Anhand des resultierenden, mit den ermittelten Anomalieerkennungsparameterwerten parametrisierten Algorithmus können anschließend neue Daten aus dem technischen System klassifiziert werden.

Das Ergebnis der Klassifizierung muss so schnell und übersichtlich wie möglich bereitgestellt werden, so dass eine zeitnahe Entscheidung über ein weiteres Vorgehen getroffen werden kann. Das Ergebnis des Anomalieerkennungsalgorithmus kann automatisch oder aber, in den meisten Fällen, durch einen Domänenexperten bewertet werden und weitere Maßnahmen abgeleitet werden.

Die Aufgabe der vorliegenden Erfindung ist es, eine möglichst schnelle und fundierte Einschätzung des technischen Systems anhand der mittels Anomalieerkennung bewerteten multidimensionalen Daten des technischen Systems zu erlangen und daraus weitere Maßnahmen ableiten zu können.

Ein erster Aspekt der Erfindung betrifft ein Verfahren zur Überwachung eines technischen Systems mittels Daten, die eine Mehrzahl von Datendimensionen aufweisen, die verschiedenen Parametern des Systems entsprechen, und die Daten mittels Anomalieerkennung bewertet werden, mit den Schritten:
- Ermitteln eines multidimensionalen Clusterbereichs mittels einem Anomalieerkennungsalgorithmus basierend auf multidimensionalen Daten des Systems, und Bewerten der Datenpunkte innerhalb des Clusterbereichs als normale Daten;
- Darstellen eines zweidimensionalen Clusterbereichs des multidimensionalen Clusterbereichs für jede Kombination von unterschiedlichen Datendimensionen in jeweils einem zweidimensionalen Feld in einer Ebene eines Pixelraums.

Für mindestens einen neuen multidimensionalen Datenpunkt werden folgende weitere Verfahrensschritte durchgeführt:
- Ermitteln einer Bewertung des neuen multidimensionalen Datenpunktes durch den Anomalieerkennungsalgorithmus;
- Ermitteln einer Position des neuen Datenpunktes bezüglich des Clusterbereichs anhand der Datenwerte des Datenpunktes für jede Datendimension;
- Eintragen des Datenpunktes in jedes der zweidimensionalen Felder an der jeweils ermittelten Position; und
- Bewerten des neuen Datenpunktes durch Kennzeichnung des Datenpunktes entsprechend der ermittelten Bewertung in jedem der zweidimensionalen Felder.

Durch die Visualisierung der durch den Anomalieerkennungsalgorithmus ermittelten Clusterbereiche können neue Datenpunkte in einfacher Weise als normal oder anormal eingestuft werden. Dabei weisen Datenpunkte, die innerhalb eines ermittelten Clusterbereiches liegen, in der Regel auf einen Normalbetrieb des technischen Systems hin. Durch die Darstellung jeweils zweidimensionaler Clusterbereiche für jede Kombination von unterschiedlichen Datendimensionen kann der Datenpunkt übersichtlich bezüglich aller betrachteten Datendimensionen analysiert werden. Insbesondere kann daraus auf den Ursprung der Anomalie, bzw. die Datendimension, die zu einer Anomalie führt, geschlossen werden. So kann beispielsweise durch die betrachtete Datendimension "Betriebsmodus" das Vorliegen einer Anomalie abhängig von einem vorliegenden Betriebsmodus des technischen Systems beurteilt werden. Somit erleichtert das Verfahren die Interpretierbarkeit von neu ermittelten Daten des Systems durch jeweils die Gegenüberstellung von zwei Datendimensionen, wobei die Bewertung des multidimensionalen Datenpunktes durch den Anomalieerkennungsalgorithmus alle Datendimensionen berücksichtigt.

So können beispielsweise Gegenüberstellungen von Parametern des Systems, die in einem Kompromiss zueinanderstehen, für die Überwachung eines Systems besonders interessant sein. Jeder der Parameter wird auf jeweils eine Datendimension abgebildet. Solche Gegenüberstellungen von jeweils zwei Datendimensionen sind beispielsweise Leistung gegenüber Geschwindigkeit, Intensität gegenüber Verschleiß, Umsatz gegenüber Gewinn, Stückzahl gegenüber Produktionsdauer oder Stückzahl gegenüber Qualität. Des Weiteren können Messgrößen verglichen werden die miteinander multipliziert physikalisch eine Leistung ergeben, wie zum Beispiel Spannung gegen Strom, Drehzahl gegen Drehmoment, Druck gegen Durchfluss, um Regionen gleicher Leistung zu ermitteln. Es können Größen wie Werkzeugnummer und Maximalstrom beziehungsweise Druck, die von einer weiteren gemeinsamen charakteristischen Größe abhängen, verglichen werden, sodass sich klare Gruppen von ähnlichen Datenpunkten ergeben. Durch die parallele Darstellung der zweidimensionaler Felder kann ein technisches System, das durch eine Vielzahl von Datendimensionen charakterisiert wird, übersichtlich und leicht interpretierbar werden.

In einer vorteilhaften Ausführungsform wird bei einem multidimensionalen Clusterbereich für Daten mit genau zwei Datendimensionen die Bewertung des neuen Datenpunktes im Pixelraum durch Ermitteln einer minimalen Distanz zum nächsten Kernpunkt des ermittelten Clusterbereichs statt durch den Anomalieerkennungsalgorithmus bestimmt werden.

Dabei wird ein neuer Datenpunkt als Bildpunkt oder Pixel bezeichnet, in einem Pixelraum interpretiert und für einen dementsprechenden Bildpunkt über eine minimale Distanz zum nächsten Kernpunkt aus einer Ergebnismatrix, die beim Ermitteln des multidimensionalen, hier also zweidimensionalen Clusterbereichs mittels des Anomalieerkennungsalgorithmus, insbesondere eines DBSCAN-Anomalieerkennungsalgorithmus, ermittelt wurde, berechnet und entsprechend dargestellt. Somit können Datenpunkte, die zwischen dem Durchführen eines tatsächlichen Anomalieerkennungsalgorithmus ermittelt wurden, sehr schnell, insbesondere in Echtzeit, gegenüber dem erstellten zweidimensionalen Clusterbereich überprüft und bewertet werden. Die Ermittlung der Lage der Datenpunkte im Pixelraum kann somit das Anomalieverhalten approximieren. Diese Überprüfung im Pixelraum kann auch als Approximation des tatsächlichen Anomalieerkennungsalgorithmus für einen multidimensionalen Datenpunkt ausgeführt werden. Der neue multidimensionale Datenpunkt ist damit noch nicht tatsächlich mit dem Anomalieerkennungsalgorithmus bewertet, kann jedoch zur Einordnung in die jeweils zweidimensionalen Clusterbereiche approximiert werden und somit eine schnelle erste Analyse ermöglichen.

In einer vorteilhaften Ausführungsform wird jeder der zweidimensionalen Clusterbereiche in jeweils ein Feld einer zweidimensionalen Matrix entsprechend der Kombination der beiden dargestellten Datendimensionen angeordnet werden.

Dies hat den Vorteil, dass Daten mit einer gemeinsamen Datendimension sehr einfach mit dem Anomalieverhalten bei einer unterschiedlichen Datendimension verglichen werden können.

In einer vorteilhaften Ausführungsform werden zusätzliche Metakennwerte zu mindestens einem der zweidimensionalen Clusterbereiche besonders vorteilhaft aber auch für alle zweidimensionalen Felder, innerhalb der zweidimensionalen Matrix, dargestellt.

Dadurch können weitere, zur Analyse der neuen Daten hilfreiche Information bereitgestellt werden.

In einer vorteilhaften Ausführungsform werden zum Ermitteln eines multidimensionalen Clusterbereichs und zum Ermitteln einer Bewertung des neuen multidimensionalen Datenpunktes dieselben Anomalieerkennungsparameterwerte verwendet.

Dies ermöglicht eine optimale Einschätzung der Anomalie des neuen Datenpunktes, da die Bewertung des neuen Datenpunktes über die gleichen Parameterwerte erfolgt, wie sie zum Ermittlung der Clusterbereiche selbst verwendet wurden.

In einer vorteilhaften Ausführungsform wird ein dichtebasierter Anomalieerkennungsalgorithmus mit einem Distanzwert und einer Minimalanzahl an Datenpunkten in einem Cluster als Anomalieerkennungsparameter verwendet.

Ein bevorzugt eingesetzter dichtebasierte Anomalieerkennungsalgorithmus ist ein als DBSCAN (Density-Based Spatial Clustering of Applications with Noise) bezeichneter Algorithmus. Ein solcher Anomalieerkennungsalgorithmus arbeitet dichtebasiert und ist in der Lage, mehrere Cluster zu erkennen. Rauschpunkte werden dabei ignoriert und separat zurückgeliefert. Datenpunkte innerhalb eines Clusters werden als Kernpunkte bezeichnet. Dabei definiert
ein Anomalieerkennungsparameter "Distanz" die maximale Entfernung eines Datenpunktes von einem Kernpunkt, so dass der Datenpunkt noch zum Cluster gehört.
Ein Anomalieerkennungsparameter "Minimalanzahl an Datenpunkten" definiert wann ein Datenpunkt dicht ist und somit innerhalb eines Clusters liegt, nämlich wenn er mindestens die Minimalanzahl an Datenpunkten in einem Abstand kleiner gleich dem Distanzwert hat.

In einer vorteilhaften Ausführungsform umfasst ein zweidimensionaler Clusterbereich alle Datenpunkte, deren Distanz zu Kernpunkten des ermittelten Clusterbereichs kleiner als der verwendete Distanzwert eines Clusters sind. Diese werden verschieden, insbesondere farblich verschieden, vom Bereich außerhalb des Clusterbereichs dargestellt.

Somit ist ein zweidimensionaler Clusterbereich eindeutig definiert und kann im Pixelraum in einem Feld entsprechend den gewählten beiden verschiedenen Datendimensionen dargestellt werden. Der zweidimensionale Clusterbereich basiert somit auf den Daten im Normalbetrieb, mit denen der Anomalieerkennungsalgorithmus trainiert wurde. Er stellt somit die Referenz zur Bewertung eines Datenpunktes bezüglich einem normalen Verhalten des Systems dar.

In einer vorteilhaften Ausführungsform wird mindestens eine Eingrenzung des zweidimensionalen Clusterbereichs abhängig von dem verwendeten minimalen Distanzwert des Anomalieerkennungsalgorithmus, insbesondere eine erste Eingrenzung bei einem halben und eine zweite Eingrenzung bei einem ganzen Distanzwert zu einem Kernpunkt, ermittelt und dargestellt.

Dies erleichtert es zwischen Kernpunkten, diese liegen in der Regel innerhalb der ersten Eingrenzung, und Randpunkten des Clusters, diese liegen innerhalb der zweiten Eingrenzung, unterscheiden zu können. Die Datenpunkte innerhalb der ersten Eingrenzung werden als normal, das heißt von einem System im Normalbetrieb kommend, angenommen. Alle Datenpunkte außerhalb dieser beiden Eingrenzungen werden als Rauschen beziehungsweise als anormal bewertet. In einzelnen Feldern können allerdings auch anormale Datenpunkte innerhalb der Eingrenzung des Clusters liegen.

In einer vorteilhaften Ausführungsform ist in einem der Felder mindestens ein neuer Datenpunkt markierbar, und in jedem der weiteren Felder wird lediglich der markierte Datenpunkt entsprechend seiner Bewertung dargestellt.

Dies hat den Vorteil, dass insbesondere ein menschlicher Benutzer sich voll auf die Analyse der markierten Datenpunkte konzentrieren kann. Bei geschickter Wahl einer Datendimension, zum Beispiel als Betriebsmodus, kann diese Selektionsfunktion zur Analyse von Datenpunkten bei bestimmten Betriebsbedingungen genutzt werden, indem in einem Feld mit der entsprechenden Datendimension der Betriebsbedingung komplette, rechteckige Teilbereiche gewählt werden.

In einer vorteilhaften Ausführungsform werden Datenpunkte abhängig von ihrem zeitlichen Auftreten gekennzeichnet, bevorzugt mit unterschiedlicher Transparenz.

Somit kann ein historischer Trend erkennbar werden. Beispielsweise werden aktuellere Datenpunkte opak, also undurchlässig, und weiter in der Vergangenheit liegende, historische Datenpunkte, transparent dargestellt, so dass die Transparenz des Datenpunktes mit dem Alter zunimmt. Liegen nun transparente und opake Datenpunkte in einem gleichen Pixelbereich, ist ein erneutes Ermitteln eines multidimensionalen Clusterbereichs basierend auf allen Datenpunkten, d.h. einschließlich der neuen Datenpunkte, durch den Anomalieerkennungsalgorithmus zu empfehlen, da die Datenpunkte sich stabilisieren und als neuer Cluster erkannt werden, sobald die Datenpunkte eine Anzahl von MinPts überschreiten.

Liegen dagegen sich von durchlässig zu undurchlässig entwickelnde Datenpunkte in nebeneinander liegenden Pixelbereichen, so weist dieser auf einen anormalen Trend hin.
In einer vorteilhaften Ausführungsform ist mindestens ein neuer Datenpunkt in einem Feld markierbar. Für den mindestens einen markierten Datenpunkt werden die Datendimensionen, die zu der angezeigten Bewertung führten, ermittelt und dargestellt.

Dies ermöglicht einen schnellen Überblick und eine schnelle Bewertung des Datenpunktes bezüglich der unterschiedlichen Datendimensionen.

In einer vorteilhaften Ausführungsform gibt der Metakennwert eines Feldes die Anzahl der neuen Datenpunkte an, deren Kennzeichnung mit der Lage des Datenpunktes bezüglich des Clusterbereiches (C34) übereinstimmt.

In einer vorteilhaften Ausführungsform wird eine Meldung bereitgestellt, wenn eine vorgegebene Anzahl von neuen Datenpunkten bei einem oder mehreren vorgegebenen zweidimensionalen Feldern außerhalb des Clusterbereichs liegt.

Ein zweiter Aspekt der Erfindung betrifft eine Überwachungsvorrichtung zur Überwachung eines technischen Systems mittels Daten, die eine Mehrzahl von Datendimensionen aufweisen, die verschiedenen Parametern des Systems entsprechen und die Daten mittels Anomalieerkennung bewertet werden, umfassend:
- eine Clusterermittlungseinheit, die derart ausgebildet ist, einen multidimensionalen Clusterbereich mittels einem Anomalieerkennungsalgorithmus basierend auf multidimensionalen Daten des Systems zu ermitteln, und die Datenpunkte innerhalb des Clusterbereichs als normale Daten zu bewerten;
- eine Anzeigeeinheit, die derart ausgebildet ist, einen zweidimensionalen Clusterbereich des multidimensionalen Clusterbereichs für jede Kombination von unterschiedlichen Datendimensionen in jeweils ein zweidimensionales Feld in einer Ebene eines Pixelraums darzustellen; und
- eine Bewertungseinheit, die derart ausgebildet ist, jeweils für mindestens einen neuen multidimensionalen Datenpunkt eine Bewertung des neuen multidimensionalen Datenpunktes durch den Anomalieerkennungsalgorithmus zu ermitteln,
eine Position des neuen Datenpunktes bezüglich des Clusterbereichs anhand der Datenwerte des Datenpunktes für jede Datendimension zu ermitteln,
den Datenpunkt in jedes der zweidimensionalen Felder an der jeweiligen ermittelten Position einzutragen, und den neuen Datenpunkt durch Kennzeichnung des Datenpunktes entsprechend der ermittelten Bewertung in jedem der zweidimensionalen Felder zu bewerten.

Die Überwachungsvorrichtung ermöglicht eine multidimensionale Darstellung von Größen, die eine Korrelation beziehungsweise einen physikalischen Zusammenhang aufweisen oder von weiteren Parametern gemeinsam abhängig sind. Ergebnisse des Anomalieerkennungsalgorithmus können nahezu in Echtzeit interaktiv dargestellt werden und somit kurzfristig und in übersichtlicher Art und Weise analysiert und Maßnahmen ergriffen werden.

Die Überwachungsvorrichtung umfasst eine graphische Benutzerschnittstelle umfassend die Anzeigeeinheit und eine Eingabeeinheit, die derart ausgebildet ist, in einem der Felder mindestens einen neuen Datenpunkt zu markieren und in jedem der weiteren Felder lediglich den markierte Datenpunkt entsprechend seiner Bewertung darzustellen.

Ein dritter Aspekt der Erfindung betrifft ein Computerprogrammprodukt umfassend ein nicht-flüchtiges, computerlesbares Medium, das direkt in einem Speicher eines digitalen Computers ladbar ist, umfassend Programmcodeteile, die dazu geeignet sind, die Schritte des Verfahrens durchzuführen.

Sofern es in der nachfolgenden Beschreibung nicht anders angegeben ist, beziehen sich die Begriffe "ermitteln", "darstellen", "eintragen", "bewerten" und dergleichen, vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse.

Unter einem "Speicher" kann im Zusammenhang mit der Erfindung beispielsweise ein Speicher in Form von Arbeitsspeicher (Random Access Memory RAM) der eine Festplatte verstanden werden.

Die jeweilige Einheit, zum Beispiel die Bewertungseinheit, kann als Vorrichtung oder als Teil einer Vorrichtung, zum Beispiel als Computer oder als Mikroprozessor oder als Steuerrechner einer größeren Einheit ausgebildet sein. Bei einer softwaretechnischen Implementierung kann die jeweilige Einheit als eine Funktion, als eine Routine, als Teil eines Programmcodes oder als ausführbares Objekt ausgebildet sein.

Ein Computerprogrammprodukt, wie zum Beispiel ein Computerprogramm-Mittel, kann beispielsweise als Speichermedium wie zum Beispiel Speicherkarte, USB-Stick, CD-ROM, DVD oder auch in Form einer herunterladbaren Datei, die von einem Server in einem Netzwerk bereitgestellt oder geliefert werden, ausgebildet sein.

Ausführungsbeispiele des erfindungsgemäßen Verfahrens beziehungsweise der erfindungsgemäßen Überwachungsvorrichtung sind in den Zeichnungen beispielhaft dargestellt und werden anhand der nachfolgenden Beschreibung näher erläutert.

Es zeigen:
- Figur 1: ein Ausführungsbeispiel des erfindungsgemäßen Verfahrens als Ablaufdiagramm;
- Figur 2: ein erstes Ausführungsbeispiel einer gemäß dem erfinderischen Verfahren erzeugten Darstellung von zweidimensionalen Clusterbereichen als Feld in einer Ebene;
- Figur 3: einen vergrößerten Ausschnitt eines Feldes mit einem zweidimensionalen Clusterbereich;
- Figur 4: ein zweites Ausführungsbeispiel einer schematischen Darstellung eines multidimensionalen Clusterbereichs mit Metakennwerten;
- Figur 5: ein drittes Ausführungsbeispiel einer schematischen Darstellung eines multidimensionalen Clusterbereichs mit Kennzeichnung der zeitlichen Abfolge von neuen Daten; und
- Figur 6: ein Ausführungsbeispiel einer erfindungsgemäßen Überwachungsvorrichtung in schematischer Darstellung.

Einander entsprechende Teile sind in allen Figuren mit den gleichen Bezugszeichen versehen.

Zur Überwachung eines technischen Systems werden Anomalieerkennungsverfahren eingesetzt. Insbesondere eine dichtebasierte räumliche Clusteranalyse mit Rauschen, der so genannte DBSCAN-Algorithmus, eignet sich für die Anomalieerkennung anhand vieldimensionaler Daten. Die unterschiedlichen Parameter eines technischen Systems bilden dabei jeweils eine Datendimension eines multidimensionalen Datenpunktes.

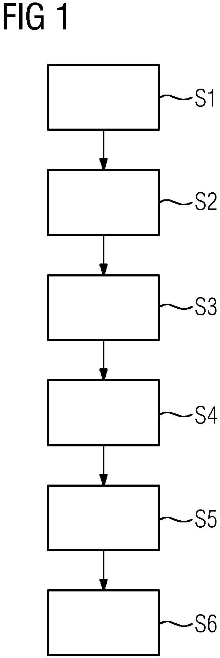

Die Darstellung von multidimensionalen Daten ist nicht trivial. Bisher wurden zahlreiche Ansätze genutzt, um multidimensionale und somit multivariable Daten zu visualisieren, wie beispielsweise geometrische Projektionen, Icon-basierte Verfahren, pixelorientierte Verfahren wie beispielsweise Kreissegmente, pixelorientierte Spiralen- und Achsentechniken, oder hierarchische Verfahren. Um multidimensionale Daten, die nun zusätzlich über einen Anomalieerkennungsalgorithmus in normale oder abnormale Datenpunkte klassifiziert werden, interpretieren und bewerten zu können, wird das in Figur 1 schematisch dargestellte Verfahren vorgeschlagen.

Dabei wird in einem ersten Schritt S1 ein multidimensionaler Clusterbereich mittels einem Anomalieerkennungsalgorithmus basierend auf multidimensionalen Daten des Systems ermittelt. Datenpunkte, die innerhalb des ermittelten Clusterbereichs liegen, werden als normale Daten bewertet. Das heißt im Umkehrschluss, dass das technische System, das diese Daten bereitstellt in einem normalen, störungsfreien Betrieb arbeitet. Anschließend, im Verfahrensschritt 2, wird jeweils ein zweidimensionaler Clusterbereich des multidimensionalen Clusterbereichs für jede Kombination von unterschiedlichen Datendimensionen als Feld in einer Ebene dargestellt. Dieses Feld in einer Ebene stellt einen Pixelraum dar. Ein Pixelraum wird häufig auch als Bilderraum bezeichnet. In einem vierdimensionalen Datenpunkt ergeben sich somit sechs verschiedene Dimensionalen in Clusterbereichen, die in sechs Feldern in einer Ebene des Pixelraums dargestellt sind. Beispielsweise sind die Datendimensionen bei einem vierdimensionalen Datenpunkt ein gemessener Druck, Durchfluss, Temperatur sowie der bei der Messung vorliegende Betriebsmodus des Systems.

Im weiteren Verfahrensschritt S3 wird nun für jeden neuen multidimensionalen Datenpunkt eine Bewertung durch den Anomalieerkennungsalgorithmus ermittelt, eine Position des neuen Datenpunktes bezüglich des Clusterbereichs anhand der Datenwerte des Datenpunktes für jede Datendimension ermittelt und in jedem der zweidimensionalen Felder an der jeweils ermittelten Position eingetragen, siehe S5. Zusätzlich wird im Verfahrensschritt S6 der neue Datenpunkt durch Kennzeichnung entsprechend der ermittelten Bewertung in jedem der zweidimensionalen Felder bewertet, siehe Verfahrensschritt S6. Handelt es sich bei dem multidimensionalen Datenpunkt um einen Punkt mit zwei Datendimensionen, so kann hier die Bewertung des neuen Datenpunktes ebenfalls im Pixelraum und nicht durch das Anwenden des Anomalieerkennungsalgorithmus auf den Datenpunkt ermittelt werden. In diesem Fall wird jeder Datenpunkt als Bildpunkt behandelt und die Distanz zum nächsten Kernpunkt, der durch den gelernten Anomalieerkennungsalgorithmus ermittelt und in einer Ergebnismatrix bereitgestellt wurde, ermittelt und in das zweidimensionale Feld an der durch den Datenwert gegebenen Position und entsprechend der Lage inner- oder außerhalb des Clusterbereichs als normal oder anormal gekennzeichnet. Der Anomalieerkennungsalgorithmus kann dabei lediglich in festgelegten zeitlichen Abständen durchgeführt werden. Die bis zur nächsten Ausführung des Anomalieerkennungsalgorithmus anfallenden Datenpunkte werden so bezüglich ihrem Anomalieverfahren approximiert und bewertet.

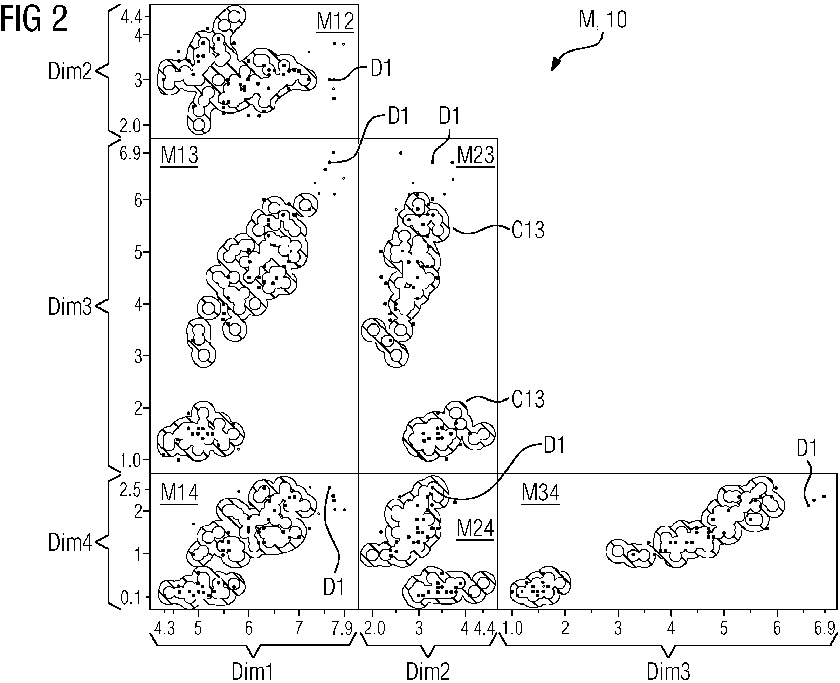

Ein Beispiel für eine Darstellung der jeweils zweidimensionalen Clusterbereiche in Feldern in einer Ebene 10 ist für einen Datenpunkt D1 mit vier Dimensionen Dim1, Dim2, Dim3, Dim4 in Figur 2 dargestellt. Für jeweils eine Kombination aus zwei verschiedenen Datendimensionen Dim1Dim2, Dim1Dim3, Dim1Dim4, Dim2Dim3, Dim2Dim4, Dim3Dim4 wird ein Feld M12, M13, M14, M23, M24, M34 beispielsweise in Form einer Matrixstruktur M dargestellt. Dabei wird die Matrix durch die erste beziehungsweise zweite Datendimension einer Kombination aufgespannt. Die Felder der Matrix, mit gleicher Kombination an Datendimensionen, jedoch in umgekehrter Reihenfolge, sowie Felder mit einer Kombination aus zwei gleichen Datendimensionen werden nicht dargestellt. Jedes Feld weist einen Wertebereich der entsprechenden Dimension auf. Die Felder M12, M13, M14, M23, M24, M34 in Figur 2 weisen somit unterschiedliche Seitenlängen auf. Die zweidimensionale Matrix M spannt eine Ebene im Pixelraum auf, wobei jeder Datenpunkt einem Pixel entspricht und der Datenwert durch eine Position des Pixels jedem der Felder M12, M13, M14, M23, M24, M34 repräsentiert wird.

Diese Matrixanordnung M hat den Vorteil, dass jeweils der Wertebereich für die Dimensionen für die Felder, die übereinander angeordnet sind, beispielsweise M12, M13, M14, gleichbleibt und in gleicher Weise die Wertebereiche für die senkrechte Richtung in Feldern, die nebeneinander angeordnet sind, beispielsweise M14, M24, M34 jeweils gleich sind. Ein zweidimensionaler Clusterbereich C13 im Feld M13 ist beispielhaft markiert. Jeder der dargestellten Clusterbereiche stellt den durch das Anomalieerkennungsverfahren anhand trainierter Daten ermittelte Cluster dar. Ein neuer multidimensionaler Datenpunkt, hier bei Punkt D1, ist nun in jedem Feld entsprechend seinem Wert bezüglich der betrachteten Datendimensionen eingetragen und beispielsweise farblich entsprechend der ermittelten Bewertung als normal oder anormal gekennzeichnet. Dabei gibt es auch Fälle, bei denen ein als anormal bewerteter Datenpunkt, der bspw. entsprechend rot eingefärbt dargestellt ist, innerhalb eines Clusterbereichs, also innerhalb der Eingrenzung, liegt. Das passiert, da bei der Projektion der hochdimensionalen Abstände auf jeweils zwei Dimensionen Informationen verloren gehen. In Feld M24 trifft dies auf den Datenpunkt D1 zu.

Gleiche Punkte können in den verschiedenen zweidimensionalen Feldern dadurch erkannt werden, dass sie beispielsweise bezüglich der Dimension auf der x-Achse den gleichen Wert übereinander liegen, das heißt auf einer senkrechten Linie liegen. Für die Dimension auf der y- beziehungsweise vertikalen Achse gilt Gleiches, das heißt gleiche Punkte liegen hier auf einer waagerechten Linie.

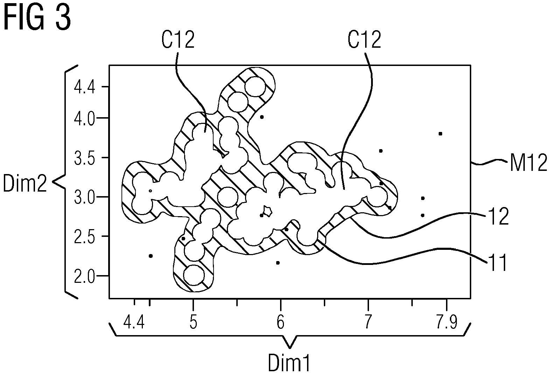

Eine Visualisierung der multidimensionalen Clusterbereiche beziehungsweise eines jeden Feldes M12, M13, M14, M23, M24, M34 besteht im Wesentlichen aus zwei Komponenten. Die erste Komponente ist eine Visualisierung des durch den Anomalieerkennungsalgorithmus gelernten Clusterbereichs C12, der für jede Kombination aus zwei unterschiedlichen Datendimensionen in einem Feld der zweidimensionalen Matrix wie in Figur 2 dargestellt als Hintergrund beziehungsweise Kontextinformation dargestellt wird. Dies ist in Figur 3 vergrößert für das Feld M12 dargestellt. Dabei ist auf der x-Achse die Datendimension Dim1, auf der y-Achse die Datendimension Dim2 jeweils mit dem relevanten Wertbereich abgebildet. Der verwendete Anomalieerkennungsalgorithmus, beispielsweise DBSCAN, wurde in der Anlernphase parametrisiert. Als Anomalieerkennungsparameterwerte wurden dabei ein Distanzwert *ε* und ein Schwellwert MinPts für die minimale Anzahl von Datenpunkten, festgelegt. Diese Parameter sind auch für die Bewertung der neuen Datenpunkte durch den gleichen Anomalieerkennungsalgorithmus beizubehalten. Sie dürfen nicht mehr, beispielsweise durch einen Nutzer, geändert werden. Basierend auf diesen Anomalieerkennungsparameterwerten wird der Clusterbereich C12 ermittelt und dargestellt. Dabei wird für die Visualisierung die minimale Distanz *ε* zu den Kernpunkten eines Clusters C12 aus einem ermittelten Distanzfeld hervorgehoben, beispielsweise auf Farbe abgebildet. Alternativ kann beispielsweise eine Schraffur verwendet werden. Die Kernpunkte selbst, die durch den gelernten Anomalieerkennungsalgorithmus anhand von bewerteten Datenpunkten ermittelt wurden, werden nicht separat dargestellt und sind beispielsweise durch eine Farbpalette erkennbar. Alternativ könnte auch eine unterschiedliche Schraffur dafür verwendet werden. Die Farbpalette wird für das Gesamtergebnisfeld einheitlich definiert. Beispielsweise wird eine divergierende Farbpalette mit grün-weiß-blau und geringer Sättigung verwendet.

Anschließend wird um die Cluster C12 noch mindestens eine Eingrenzung 11, 12 berechnet und eingezeichnet. Eine erste Eingrenzungslinie 11 zeigt eine maximale Distanz von *ε*/*2* zu einem Kernpunkt an. Eine zweite Eingrenzung 12 des zweidimensionalen Clusterbereichs C12 kennzeichnet alle Bildpunkte, die eine Distanz von *ε*, dem eingestellten Distanzwert des Anomalieerkennungsalgorithmus, zu einem Kernpunkt aufweisen. Somit können Kernpunkte, innerhalb der Eingrenzung 11 und Randpunkte, die zwischen der ersten Eingrenzung 11 und der zweiten Eingrenzung 12 liegen, unterschieden werden. Alle Bildpunkte außerhalb dieser beiden Eingrenzungen werden als Rauschen beziehungsweise als anormal angesehen und bevorzugt als blaue Punkte separat dargestellt.

Eine Erweiterung der Darstellung um einen Hillshading-Effekt erzeugt zusätzlich den Eindruck eines Höhenfeldes. Dieses kann dabei helfen die Positionierung einzelner Datenpunkte in der Nähe von Clustergrenzen besser zu beurteilen.

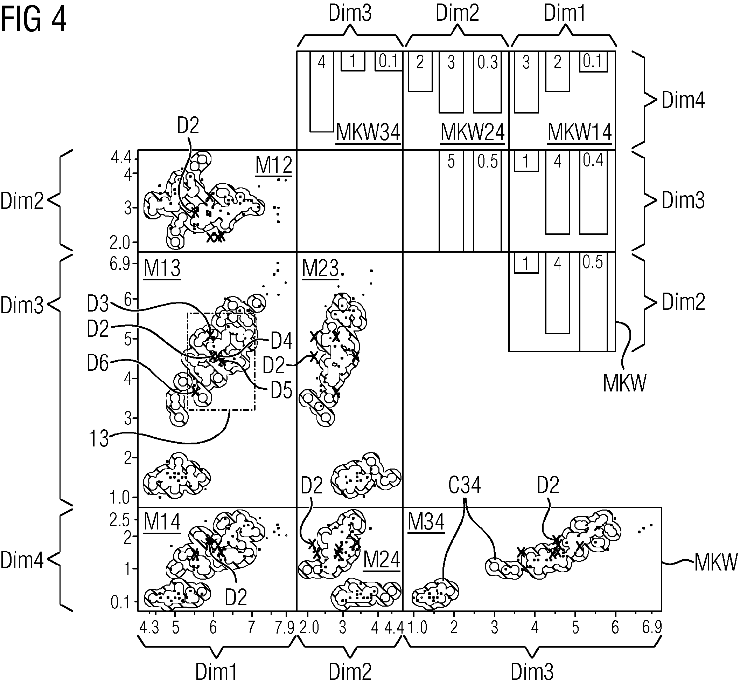

Jeder neue Datenpunkt ist nun jeweils in jedem Feld (M12, M13, M14, M23, M24, M34) dargestellt. Dies ist in Figur 4 für den Datenpunkt D2 dargestellt. Jeder neue Datenpunkt wird dabei durch den Anomalieerkennungsalgorithmus bewertet und entsprechend der Bewertung gekennzeichnet. Lediglich für zweidimensionale Datenpunkte kann der Datenpunkt statt durch den Anomalieerkennungsalgorithmus durch eine graphische Positionsermittlung im Pixelraum approximiert werden.

Der Datenpunkt D2 wurde als anomal bewertet und mit einem Kreuz als anomal gekennzeichnet. Alternativ kann auch eine farbliche Kennzeichnung, beispielsweise durch eine rote Farbe für einen anormalen Punkt, verwendet werden. Dabei kann es vorkommen, dass ein als anomal erkannter Punkt, hier D2, in manchen Feldern innerhalb des Normalbereichs, also ein mit x gekennzeichneter Punkt innerhalb der ersten Eingrenzung 11 liegt. Dies resultiert aus einem Informationsverlust durch die Projektion von einem multidimensionalen Datenraum auf die zweidimensionale Darstellung innerhalb der Felder M12,.., M34.

Um nachvollziehen zu können, welche Dimensionen für eine Anomalieklassifizierung verantwortlich sind, kann ein oder mehrere Datenpunkte markiert und beispielsweise mittels einer sogenannten "Brushing" Funktion ausgewählt werden. Dies ist beispielhaft im Feld M13 durch die Markierung 13 gekennzeichnet. In diesem Beispiel werden neben dem Datenpunkt D2 vier weitere als anormal markierte Datenpunkte D3, D4, D5, D6 ausgewählt. Eine solche Selektion kann über eine graphische Benutzeroberfläche bzw. Benutzerschnittstelle, beispielsweise mit einer Maus auf einem Bildschirm, gekennzeichnet werden. Nachfolgend werden nur noch die ausgewählten Datenpunkte mit einem x dargestellt. Alle anderen Datenpunkte sind ausgegraut. Damit kann sich der Nutzer auf die Analyse der gewählten Datenpunkte konzentrieren. Bei geschickter Wahl einer Datendimension, zum Beispiel als Betriebsbedingung, kann die Selektionsfunktion zur Analyse von Datenpunkten bei bestimmten Betriebsbedingungen genutzt werden, in dem im Feld der Dimension Betriebsbedingungen komplette rechteckige Teilbereiche gewählt werden.

Für jeden markierten Punkt D2, D3, D4, D5, D6 kann nun beispielsweise diejenige mindestens eine Datendimension, die zu der angezeigten Bewertung führte, beispielsweise auf dem freien Bereich der Matrix (nicht dargestellt), ausgegeben werden.

Eine zusätzliche, spiegelbildliche Matrix MKW nutzt den zur Verfügung stehenden Raum für die Darstellung von Metakennwerten, die die weiteren Analysen leiten. Die in Figur 4 dargestellten Metakennwertefelder geben beispielsweise an, wie viele als anormal gekennzeichnete und ausgewählte Datenpunkte in dem entsprechenden zweidimensionalen Feld mit der gleichen Kombination an Dimensionen innerhalb eines Clusterbereichs liegen und somit nicht entsprechend seiner Bewertung, diese kennzeichnet den Datenpunkt als anomal, angeordnet ist. Beispielsweise gibt das Metakennwertfeld MKW34 für die Kombination der Datendimensionen 3 und Datendimension 4 in Feld M34 an, dass von den fünf durch den Anomalieerkennungsalgorithmus als anormal bewerteten Datenpunkte D2, D3, D4, D5, D6 vier Punkte als normal, also innerhalb des Clusterbereichs angeordnet wurden, während lediglich einer der als anormal bewerteten Datenpunkte außerhalb eines Clusterbereichs C34 im Feld M34 und somit "richtig", entsprechend der Gesamtbewertung angeordnet ist.

Die Metakennwerte zu markierten Datenpunkten geben somit Hinweis darauf, welche Datendimensionen für ein Clustering besonders interessant sind.

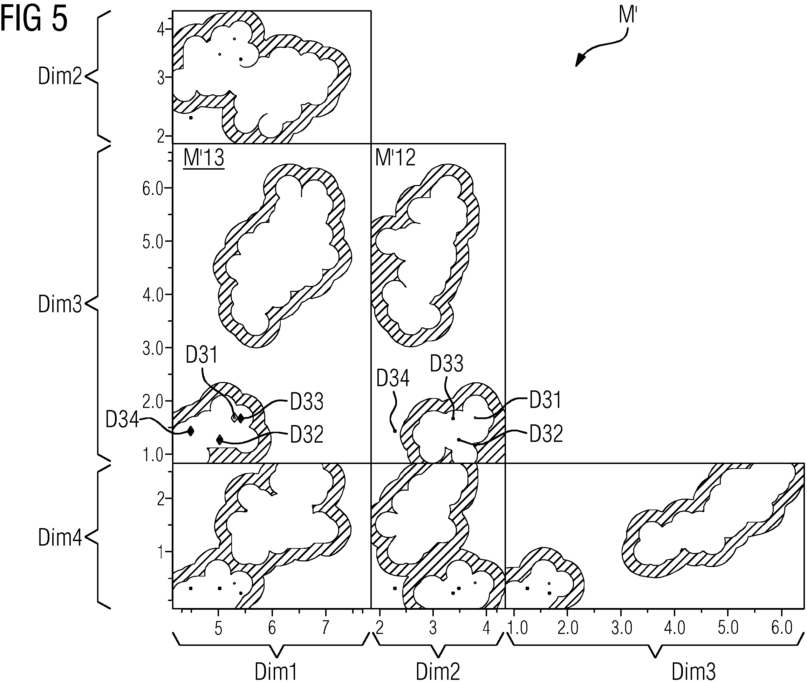

Für eine Auswertung eines historischen Trends werden aktuelle Datenpunkte undurchlässig und historische Datenpunkte transparent dargestellt, so dass die Transparenz mit der zurückliegenden Zeit seit der Erfassung des Datenpunktes zunimmt Figur 5 zeigt dies anhand von vier Datenpunkten D7, D8, D9, D10, die zeitlich aufeinanderfolgend ermittelt wurden und somit von D7 zu D9 hin mit geringerer Transparenz dargestellt sind. Liegen vermehrt opake Punkte außerhalb der bisherigen Clustereingrenzung, so kann dies ein Indiz sein, dass das Analogieerkennungsmodell neu trainiert werden sollte.
Liegen transparente und nicht transparente Datenpunkte im gleichen Bereich, ist ein neu Anlernen des Anomalieerkennungsalgorithmus zu empfehlen, da die Datenpunkte sich stabilisieren. Liegen Datenpunkte, die sich von durchlässig zu undurchlässig entwickeln, in nebeneinander liegenden Pixelbereichen, weist dies auf einen anormalen Trend hin.

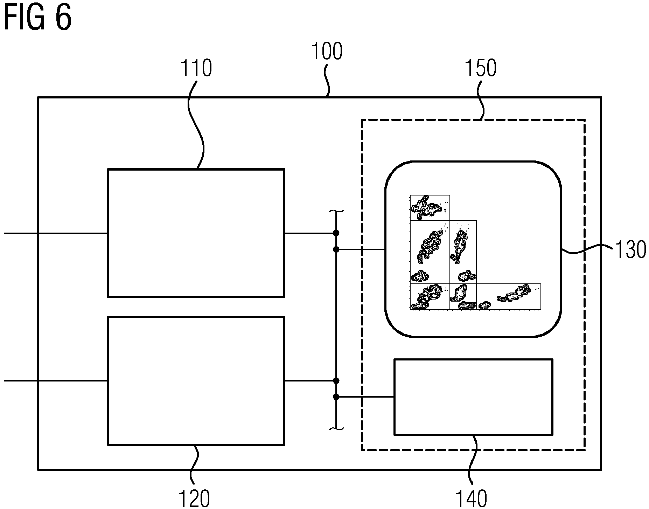

Figur 6 zeigt ein Ausführungsbeispiel einer erfindungsgemäßen Überwachungsvorrichtung 100. Die Überwachungsvorrichtung 100 umfasst eine Clusterermittlungseinheit 110, eine Bewertungseinheit 120, eine Anzeigeeinheit 130 und eine Eingabeeinheit 140. Die Anzeigeeinheit 130 und die Eingabeeinheit 140 bilden gemeinsam eine graphische Benutzerschnittstelle 150, über die ein Benutzer beispielsweise Datenpunkte markieren kann oder die Art der anzuzeigenden Metakennwerte auswählen oder eingeben kann. Die genannten Einheiten beziehungsweise die graphische Benutzerschnittstelle 150 sind bevorzugt als Prozessoren, beispielsweise Mikroprozessoren, implementiert und derart ausgebildet, das beschriebene Verfahren auszuführen.

Die Clusterermittlungseinheit 110 umfasst beispielsweise eine Dateneingabeschnittstelle, über die bereits bewertete Daten der Clusterermittlungseinheit bereitgestellt werden und die mittels eines Anomalieerkennungsalgorithmus, der auf der Clusterermittlungseinheit 110 implementiert ist, Clusterbereiche ermittelt. Die Bewertungseinheit 120 bewertet jeden neuen multidimensionalen Datenpunkt, der beispielsweise über eine externe Schnittstelle der Bewertungseinheit 120 bereitgestellt wird und ermittelt die Position des neuen Datenpunktes bezüglich des Clusterbereichs anhand der Datenwerte des Datenpunktes für jede Datendimension und veranlasst die Anzeigeeinheit 130 den Datenpunkt in jedes der zweidimensionalen Felder an der jeweils ermittelten Position einzutragen und den Datenpunkt entsprechend der ermittelten Bewertung zu kennzeichnen.

Die graphische Benutzerschnittstelle 150 kann beispielsweise als Monitor und separate Maus, oder als berührungssensitiver Bildschirm mit Eingabemöglichkeit über Berührung ausgebildet sein.

Durch das beschriebene Verfahren ist eine multidimensionale Darstellung von Parametern, die eine Korrelation beziehungsweise einen physikalischen Zusammenhang aufweisen oder von weiteren Parametern gemeinsam abhängig sind, möglich. Dabei kann eine interaktive Darstellung die Ergebnisse des Anomalieerkennungsalgorithmus in nahezu Echtzeit bereitgestellt werden. Dies ermöglicht eine sehr kurzfristige Analyse der Daten. Eine direkte Gegenüberstellung des gelernten Anomalieerkennungsmodells und der neuen Datenpunkte ermöglicht eine unmittelbare Entscheidung über Maßnahmen. Dies wird durch die Abgrenzung des Modells gegenüber neuen Datenpunkten mittels einer Hervorhebung durch Eingrenzung der Clusterbereiche oder auch Farbe visuell verstärkt. Die Modellvisualisierung wird dabei nicht mehr im ursprünglichen Datenraum, sondern im Pixelraum berechnet. Die Laufzeit ist somit nicht mehr abhängig von der Anzahl der Datenpunkte, sondern der Anzahl der Pixel beziehungsweise einer Auflösung der Anzeigeeinheit. Über die Wahl der Anzahl der Pixel kann zwischen Auflösung und Rechenzeit abgewogen werden. Dies ermöglicht es insbesondere, große Datenmengen signifikant schneller auszuwerten und zu analysieren. Über ein geeignetes Mapping der Messgrößen bzw. Parameter auf den Pixelraum können Rechenzeit gegenüber der Auflösung abgewogen werden, so dass zum Beispiel ein Anlagenbediener schnell einen groben Überblick erhält, der dann beim Auftreten von Anomalien durch einen Instandhalter mit einer länger dauernden Analyse im Detail untersucht werden kann.

Alle beschriebenen und/oder gekennzeichneten Merkmale können im Rahmen der Erfindung vorteilhaft miteinander kombiniert werden. So können alle Merkmale, die als Teil des Verfahrens beschrieben werden, auch als Teil der Überwachungsvorrichtung unterstützt werden und die Überwachungsvorrichtung entsprechend ausgebildet sein. Die Erfindung ist nicht auf die beschriebenen Ausführungsbeispiele beschränkt.

## Patentansprüche

1. Verfahren zur Überwachung eines technischen Systems mittels Daten, die eine Mehrzahl von Datendimensionen aufweisen, die verschiedenen Parametern des Systems entsprechen, und die Daten mittels Anomalieerkennung bewertet werden, mit den Schritten:
- Ermitteln (S1) eines multidimensionalen Clusterbereichs mittels einem Anomalieerkennungsalgorithmus basierend auf multidimensionalen Daten des Systems, und Bewerten der Datenpunkte innerhalb des Clusterbereichs als normale Daten,
- Darstellen (S2) eines zweidimensionalen Clusterbereichs (C12, C13) des multidimensionalen Clusterbereichs für jede Kombination von unterschiedlichen Datendimensionen in jeweils einem zweidimensionalen Feld (M12, M13, M14, M23, M24, M34) in einer Ebene (10) eines Pixelraums; und
für mindestens einen neuen multidimensionalen Datenpunkt (D1) :
- Ermitteln (S3) einer Bewertung des neuen multidimensionalen Datenpunktes (D1) durch den Anomalieerkennungsalgorithmus;
- Ermitteln (S4) einer Position des neuen Datenpunktes (D1) bezüglich des Clusterbereiches anhand der Datenwerte des Datenpunktes (D1) für jede Datendimension,
- Eintragen (S5) des Datenpunktes (D1) in jedes der zweidimensionalen Felder (M12, M13, M14, M23, M24, M34) an der jeweils ermittelten Position; und
- Bewerten (S6) des neuen Datenpunktes (D1) durch Kennzeichnung des Datenpunktes (D1) entsprechend der ermittelten Bewertung in jedem der zweidimensionalen Felder (M12, M13, M14, M23, M24, M34).

2. Verfahren nach Anspruch 1, wobei für multidimensionale Daten mit genau zwei Datendimensionen (Dim1, Dim2) die Bewertung des neuen Datenpunktes (D1) im Pixelraum durch Ermitteln einer minimalen Distanz zum nächsten Kernpunkt des ermittelten Clusterbereichs statt durch den Anomalieerkennungsalgorithmus bestimmt wird.

3. Verfahren nach einem der vorangehenden Ansprüche, wobei jeder der zweidimensionalen Clusterbereiche (C13) in jeweils ein Feld einer zweidimensionalen Matrix (M) entsprechend der Kombination der beiden dargestellten Datendimensionen angeordnet wird.

4. Verfahren nach Anspruch 3, wobei zusätzlich Metakennwerte (MKW) zu mindestens einem der zweidimensionalen Felder (M12, M13, M14, M23, M24, M34) innerhalb der zweidimensionalen Matrix (M) dargestellt werden.

5. Verfahren nach einem der vorangehenden Ansprüche, wobei zum Ermitteln eines multidimensionalen Clusterbereichs und zum Ermitteln einer Bewertung des neuen multidimensionalen Datenpunktes (D1) dieselben Anomalieerkennungsparameterwerte, verwendet werden.

6. Verfahren nach Anspruch 5, wobei ein dichtebasierter Anomalieerkennungsalgorithmus mit einem Distanzwert und einer Minimalanzahl an Datenpunkten in einem Cluster als Anomalieerkennungsparameter verwendet wird.

7. Verfahren nach Anspruch 5 oder 6, wobei ein zweidimensionaler Clusterbereich (C12, C13) alle Datenpunkte umfasst, deren Distanz zu Kernpunkten des ermittelten Clusterbereiches kleiner als der verwendete Distanzwert eines Clusters sind und verschieden, insbesondere farblich verschieden, vom Bereich außerhalb des Clusterbereichs dargestellt werden.

8. Verfahren nach einem der Ansprüche 5 bis 7, wobei mindestens eine Eingrenzung (11, 12) des zweidimensionalen Clusterbereichs (C12, C13) abhängig von dem verwendeten Distanzwert des Anomalieerkennungsalgorithmus, insbesondere eine erste Eingrenzung bei einem halben und eine zweite Eingrenzung bei einem ganzen Distanzwert zu einem Kernpunkt, ermittelt und dargestellt wird.

9. Verfahren nach einem vorhergehenden Ansprüche, wobei in einem der Felder (M13) mindestens ein neuer Datenpunkt (D2), markierbar ist, und in jedem der weiteren Felder (M12, M14, M23, M24, M34) lediglich der markierte Datenpunkt entsprechend seiner Bewertung dargestellt wird.

10. Verfahren nach einem der vorhergehenden Ansprüche, wobei Datenpunkte abhängig von ihrem zeitlichen Auftreten, bevorzugt mit unterschiedlicher Transparenz, gekennzeichnet werden.

11. Verfahren nach einem der vorhergehenden Ansprüche, wobei in einem Feld (M12, M13, M14, M23, M24, M34) mindestens ein neuer Datenpunkt markierbar ist und für den mindestens einen markierten Datenpunkt die Datendimensionen, die zu der angezeigten Bewertung führten, ermittelt und dargestellt werden.

12. Verfahren nach Anspruch 4, wobei der Metakennwert (MKW34) eines Feldes (M34) die Anzahl der neuen Datenpunkte, deren Kennzeichnung mit der Lage des Datenpunktes bezüglich des Clusterbereiches (C34) übereinstimmt, angibt.

13. Verfahren nach einem der vorhergehenden Ansprüche, wobei eine Meldung bereitgestellt wird, wenn eine vorgegebene Anzahl von neuen Datenpunkt bei einem oder mehreren zweidimensionalen Feldern außerhalb des Clusterbereichs liegt.

14. Überwachungsvorrichtung (100) zur Überwachung eines technischen Systems mittels Daten, die eine Mehrzahl von Datendimensionen aufweisen, die verschiedenen Parametern des Systems entsprechen, und die Daten mittels Anomalieerkennung bewertet werden, umfassend:
- eine Clusterermittlungseinheit (110), die derart ausgebildet ist, einen multidimensionalen Clusterbereich mittels einem Anomalieerkennungsalgorithmus basierend auf multidimensionalen Daten des Systems zu ermitteln, und die Datenpunkte innerhalb des Clusterbereichs als normale Daten zu bewerten;
- eine Anzeigeeinheit (130), die derart ausgebildet ist, einen zweidimensionalen Clusterbereich des multidimensionalen Clusterbereichs für jede Kombination von unterschiedlichen Datendimensionen in jeweils ein zweidimensionales Feld (M12, M13, M14, M23, M24, M34) in einer Ebene (10) eines Pixelraums darzustellen; und
eine Bewertungseinheit (120), die derart ausgebildet ist, für mindestens einen neuen multidimensionalen Datenpunkt:
- eine Bewertung des neuen multidimensionalen Datenpunktes durch den Anomalieerkennungsalgorithmus zu ermitteln;
- eine Position des neuen Datenpunktes bezüglich des Clusterbereiches anhand der Datenwerte des Datenpunktes für jede Datendimension zu ermitteln,
- den Datenpunkt in jedes der zwei-dimensionalen Felder an der jeweils ermittelten Position einzutragen; und
- den neuen Datenpunkt durch Kennzeichnung des Datenpunktes entsprechend der ermittelten Bewertung in jedem der zweidimensionalen Felder zu bewerten.

15. Überwachungsvorrichtung nach Anspruch 14, mit einer graphischen Benutzerschnittstelle (140) umfassend die Anzeigeeinheit und eine Eingabeeinheit (130), die derart ausgebildet ist, in einem der Felder (M13) mindestens einen neuen Datenpunkt (D2) zu markieren und in jedem der weiteren Felder (M12, M14, M23, M24, M34) lediglich den markierte Datenpunkt entsprechend seiner Bewertung darzustellen.

16. Computerprogrammprodukt, umfassend ein nicht-flüchtiges, Computer-lesbares Medium, das direkt in einen Speicher eines digitalen Computers ladbar ist, umfassend Programmcodeteile, die dazu geeignet sind, die Schritte des Verfahrens nach einem der Ansprüche 1 bis 13 durchzuführen.
